# EUROPEAN PATENT APPLICATION

(11) **EP 3 901 892 A2**
(43) Date of publication of application: **27.10.2021**
(21) Application number: 21188876.3
(22) Date of filing: 30.07.2021
(51) Int. Cl.: G06Q 30/06, G06K 9/62

(54) **COMMODITY GUIDING METHOD AND APPARATUS, ELECTRONIC DEVICE, STORAGE MEDIUM, AND COMPUTER PROGRAM PRODUCT**

(30) Priority: 23.11.2020 CN 202011322983
(71) Applicant: Beijing Baidu Netcom Science and Technology Co., Ltd., Beijing 100085 (CN)
(72) Inventor: ZHANG, Miao, Beijing 100085 (CN)
(74) Representative: Feller, Frank

(57) **Abstract**

The present disclosure discloses a commodity guiding method and apparatus, an electronic device, a storage medium and a computer program product, and relates to the technical fields of artificial intelligence image processing and commodity recommendation. The commodity guiding method includes: identifying identity information of a character in a first picture; performing posture identification on the character in the first picture, to obtain posture information; matching the posture information of the character in the first picture with posture information of a same character in a plurality of prestored commodity pictures, and determining the successfully matched commodity picture as a recommended commodity picture of the first picture; displaying a commodity guiding identifier in an area within or around the first picture; and switching the first picture into the recommended commodity picture after the commodity guiding identifier is triggered. By utilizing the present disclosure, personalized commodity recommendation can be realized.

## Description

### TECHNICAL FIELD

The present disclosure relates to the technical field of artificial intelligence image processing, in particular to a commodity recommendation technology based on image processing, more in particular to a commodity guiding method, an apparatus, a device and a storage medium.

### BACKGROUND

Generally, a user uploads a picture to be identified, to obtain more information about the contents of the picture. For example, in a case where the picture is about a building, the name, address and other information of the building are desired, in a case where the picture is about an animal or plant, the name, profile and other information of the animal or plant are desired, and in a case where the picture is about an commodity, the use profile of the commodity is desired. In addition, at present, commodity recommendation information can be added in a picture identification result page, so that a user can conveniently view commodities related to entities, and the purpose of commodity recommendation is achieved. For example, in a case where an entity in the picture is an animated character, besides displaying a picture set, a brief introduction, a picture origin, a similar picture and the like of the animated character in a picture identification result, a commodity recommendation icon can be added to a page, and a commodity list related to the animated character is displayed after a user clicks the commodity recommendation icon. However, since the commodity recommendation form is more conventional, it is more and more difficult to attract users to perform operations so as to know related commodities, and the commodity recommendation effect is poor.

### SUMMARY

The present disclosure provides a commodity guiding method, an apparatus, a device and a storage medium, which can improve the commodity recommendation effect to a certain extent through a personalized commodity guiding form.

According to a first aspect of the present disclosure, there is provided a commodity guiding method, including:
identifying identity information of a character in a first picture;
performing posture identification on the character in the first picture, to obtain posture information;
matching the posture information of the character in the first picture with posture information of a same character in a plurality of prestored commodity pictures, and determining the successfully matched commodity picture as a recommended commodity picture of the first picture;
displaying a commodity guiding identifier in an area within or around the first picture; and
switching the first picture into the recommended commodity picture after the commodity guiding identifier is triggered.

According to a second aspect of the present disclosure, there is provided a commodity guiding apparatus, including:
a picture identification module configured for identifying identity information of a character in a first picture;
a posture identification module configured for performing posture identification on the character in the first picture, to obtain posture information;
a matching processing module configured for matching the posture information of the character in the first picture with posture information of a same character in a plurality of prestored commodity pictures, and determining the successfully matched commodity picture as a recommended commodity picture of the first picture;
a guide identifier display module configured for displaying a commodity guiding identifier in an area within or around the first picture; and
a picture switching module configured for switching the first picture into the recommended commodity picture after the commodity guiding identifier is triggered.

According to a third aspect of the present disclosure, there is provided an electronic device, including:
at least one processor; and
a memory communicatively connected with the at least one processor; wherein
the memory stores instructions executable by the at least one processor, the instructions being executed by the at least one processor to enable the at least one processor to perform the above method.

According to a fourth aspect of the present disclosure, there is provided a non-transitory computer-readable storage medium storing computer instructions for enabling a computer to perform the above method.

According to an embodiment of the present disclosure, a recommended commodity picture is screened based on, for example, a human posture identification model, and since the character after posture identification and matching has a highly similar posture to the character interested by a user, the commodity with the highly similar posture can be recommended to the user in a case where the user picture is switched into the recommended commodity picture, so that the interest degree of the user can be improved to a greater extent, the probability that the user selects the recommended commodity is improved, and the commodity recommendation effect is strengthened.

It should be understood that the content described in this section is neither intended to limit the key or important features of the embodiments of the present disclosure, nor intended to limit the scope of the present disclosure. Other features of the present disclosure will be readily understood through the following description.

### BRIEF DESCRIPTION OF THE DRAWINGS

The drawings are used to better understand the solution and do not constitute a limitation to the present disclosure. In which:
FIG. 1 is a flow diagram of a commodity guiding method according to an embodiment of the present disclosure;
FIG. 2 is a flow diagram of commodity picture data preprocessing according to an embodiment of the present disclosure;
FIG. 3 is an effect diagram of a conventional display page for recommending commodities based on pictures;
FIG. 4 is an effect diagram showing a commodity recommendation page after clicking the commodity guiding icon in FIG. 3;
FIG. 5 is a block diagram of logical architectures for off-line processing and on-line processing according to an embodiment of the present disclosure;
FIG. 6 is a schematic diagram of an inventory list of two animated characters in an embodiment of the present disclosure;
FIG. 7 is a schematic diagram of posture data for two animated characters in the embodiment of FIG. 6;
FIG. 8 is a schematic diagram of a pre-stored posture data list of an animated character in an embodiment of the present disclosure;
FIG. 9 is a flowchart for judging, according to pictures, whether commodity guiding needs to be displayed in an embodiment of the present disclosure;
FIG. 10 is a schematic diagram of a guidance prompt located on a picture identification result page in an embodiment of the present disclosure;
FIG. 11 is an effect diagram of a plurality of key diagrams in a switching process according to an embodiment of the present disclosure;
FIG. 12 is a comparative effect diagram of an identified picture and a recommended commodity picture processed in an embodiment of the present disclosure;
FIG. 13 is a block diagram of a structure of a commodity guiding apparatus according to an embodiment of the present disclosure;
FIG. 14 is a block diagram of an electronic device implementing the commodity guiding method of an embodiment of the present disclosure.

### DETAILED DESCRIPTION

Exemplary embodiments of the present disclosure are described below in combination with the drawings, including various details of the embodiments of the present disclosure to facilitate understanding, which should be considered as exemplary only. Thus, those of ordinary skill in the art should realize that various changes and modifications can be made to the embodiments described here without departing from the scope and spirit of the present disclosure. Likewise, descriptions of well-known functions and structures are omitted in the following description for clarity and conciseness.

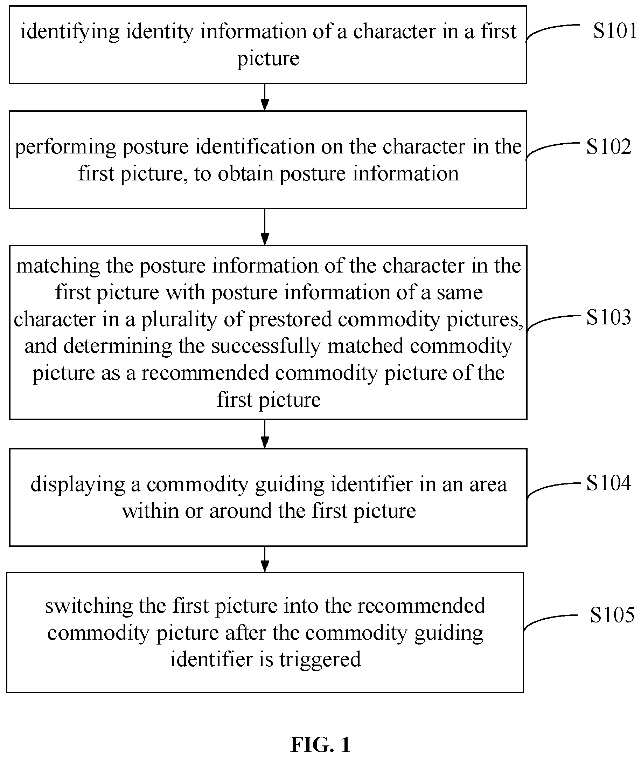

FIG. 1 is a flow diagram illustrating a commodity guiding method provided by an embodiment of the present disclosure. The commodity guiding method includes:
S101, identifying identity information of a character in a first picture;
S102, performing posture identification on the character in the first picture, to obtain posture information;
S103, matching the posture information of the character in the first picture with posture information of a same character in a plurality of prestored commodity pictures, and determining the successfully matched commodity picture as a recommended commodity picture of the first picture;
S104, displaying a commodity guiding identifier in an area within or around the first picture; and
S105, switching the first picture into the recommended commodity picture after the commodity guiding identifier is triggered.

According to an embodiment of the present disclosure, after receiving a picture to be identified input by a user, for example, in a case where the picture contains a character (such as a cartoon character, an animated character, a comics character or a movie and television work character), an embodiment of the present disclosure performs identity identification on the character in the picture, to obtain identity information (such as a name, a character profile, a character work and the like) of the character in the picture; posture identification needs to be performed on the character in the picture, to obtain posture information of the character in the picture (such as standing, sitting posture, dropping of two arms, lifting of a left arm and dropping of a right arm and the like); then, on the basis of the identified identity information and posture information, matching (or comparing) is performed on the material information of the commodity picture prestored in the database, for example, the identity of the character identified from the user picture is a "first cartoon character" (e.g., Donald Duck), and the posture information of the identified first cartoon character is "lifting of a left arm and dropping of a right arm"; in a case where the characters are matched, all commodity pictures of the first cartoon character can be screened out in the database, then commodity pictures with the posture of "lifting of a left arm and dropping of a right arm" are screened out, and the commodity pictures are used as commodity pictures recommended to a user. Here, because the recommended commodity pictures pass the matching process of the character posture, the first cartoon character in the recommended commodity pictures and the first cartoon character in the user picture have highly similar postures, and commodities with highly similar postures are recommended to the user, so that the user interest degree can be improved to a greater extent, and the recommendation effect can be strengthened. In addition, a commodity guiding mode is designed to switch the user picture into the recommended commodity picture, and from the perspective of the visual effect in a practical application, since the character postures in the two pictures have similarity, the switching can bring visual impact, for example, in a case where the user picture is about a two-dimensional 2D character and the recommended commodity picture is about a three-dimensional 3D character, the effect of one-key switching for the user is that a 2D character is changed into a 3D character (the character postures are similar), so that the visual perception can improve the interest degree of the user and improve the probability that the user selects recommended commodities.

With regard to the "character" mentioned in an embodiment of the present disclosure, it may be a character image of a human being (e.g., Elsa), a character image of an animal (e.g., Peppa Pig), an animation or cartoon image of this kind, or an image close to a real state, such as an animal appearing in the "animal world", etc. For convenience of description herein, the various objects referred to above are collectively referred to as "characters" and may be understood to be character images and/or animal images.

In an embodiment of the present disclosure, optionally, the matching condition, that is, the degree of matching between the character in the user picture and the character in the recommended commodity picture, may be set according to actual requirements. In some embodiments, an arm posture and/or a leg posture of a character may be considered, and in other embodiments, a head posture and the like may also be considered, and postures of limbs thereof may be considered for an animal image, and the like. In a case of matching, complete matching (for example, consistent arm postures and leg postures) may be set, and partial matching (consistent arm postures or consistent leg postures) may also be set. Specifically, one of several solutions may be adopted as follows:
- The posture information of the character in the first picture includes the arm posture of the character, and the successfully matched commodity picture includes a commodity picture consistent with the arm posture of the character in the first picture.
- The posture information of the character in the first picture includes the leg posture of the character, and the successfully matched commodity picture includes a commodity picture consistent with the leg posture of the character in the first picture.
- The posture information of the character in the first picture includes the arm posture and the leg posture of the character, and the successfully matched commodity picture includes a commodity picture consistent with the arm posture and/or the leg posture of the character in the first picture.

Therefore, in a case where posture identification is performed on the characters in the commodity picture in the early stage, part or all of the posture data of the characters may be identified and used for matching and screening. Alternatively, the posture data of the characters in the commodity pictures can be identified as detailed and comprehensive as possible in the early stage, and in a case where matching is performed on the posture data of the characters in the user pictures in the later stage, operators may set different matching conditions according to different precision requirements, the higher the consistency degree of the posture data is, the higher the matching degree is, and the higher the similarity degree between the characters in the finally determined recommended commodity pictures and the user pictures is.

In an embodiment of the present disclosure, optionally, after the commodity guiding identifier is triggered, the first picture is switched into a recommended commodity picture, which may be realized in any one of the following ways:
- directly switching the first picture into the recommended commodity picture within a first preset time period after the commodity guiding identifier is triggered;
- switching the first picture into the recommended commodity picture in a gradual switching mode within a second preset time period after the commodity guiding identifier is triggered.

A user picture is switched into a recommended commodity picture, and from the perspective of the visual effect in a practical application, because the human postures in the two pictures have similarity, the switching can bring visual impact, the visual experience can improve the interest degree of the user, and improve the probability that the user selects recommended commodities.

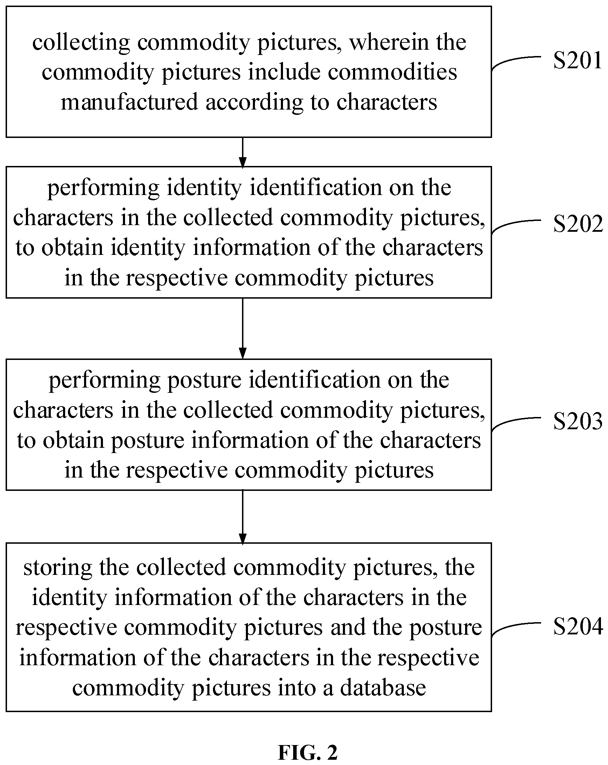

In an embodiment of the present disclosure, optionally, referring to FIG. 2, before performing picture identification processing on the first picture, performing preprocessing on commodity picture data may specifically include:
S201, collecting commodity pictures, wherein the commodity pictures include commodities manufactured according to characters;
S202, performing identity identification on the characters in the collected commodity pictures, to obtain identity information of the characters in the respective commodity pictures;
S203, performing posture identification on the characters in the collected commodity pictures, to obtain posture information of the characters in the respective commodity pictures; and
S204, storing the collected commodity pictures, the identity information of the characters in the respective commodity pictures and the posture information of the characters in the respective commodity pictures into a database.

Through the above processing, a large amount of picture resources of commodities to be recommended can be obtained, at least one character should be contained in the picture, and identity identification and posture identification need to be performed on the character in the picture. For example, by processing the neural network model of identity identification and human posture identification (which may be two models or one neural network model with identity identification capability and human posture identification capability), the identity information and human posture data of the characters in the picture can be obtained, and the picture and corresponding data can be stored, for example, each character corresponds to a list, wherein posture data in picture of commodities to be recommended of the character are include in the list. The pre-stored data are used in a case where matching is performed on the posture data of the characters in the user picture, and the matched commodities are guided and recommended to the user.

Having described various implementations of the embodiments of the present disclosure, specific processing procedures and corresponding effects of the embodiments of the present disclosure are described below by way of specific examples.

Before a specific embodiment is provided, a general explanation of concepts or processes related to embodiments of the present disclosure is first presented. Generally, identifying a picture refers to a behavior that a user wants to get more information about a picture by uploading the picture, and a picture identification result page returned by a website is a page carrying more information of the picture. An entity refers to a subject in a picture identified according to picture information. Animation generally refers to a combination of animation and caricature, or a collection of animation and caricature. An animated character picture refers to a picture in which an entity is an animated character. The commodity guiding is that the commodity guiding is displayed in a picture identification result page, so that a user can conveniently view the commodity related to an entity. The commodity recommendation is to display recommended commodities according to the entity information, so as to meet the deeper requirements of the user. After the subject is identified in the picture identification result of the picture, information related to the entity needs to be displayed in the picture identification result page, so as to meet the picture identification requirement of the user.

For clarity of description, the following specific examples are described with reference to "an animated character in a picture, with a recommended commodity being a garage kit commodity of the animated character".

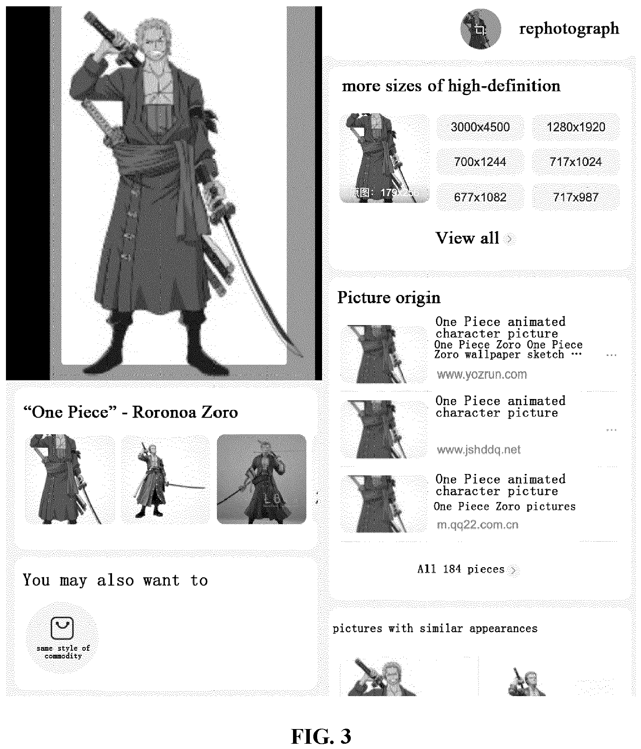

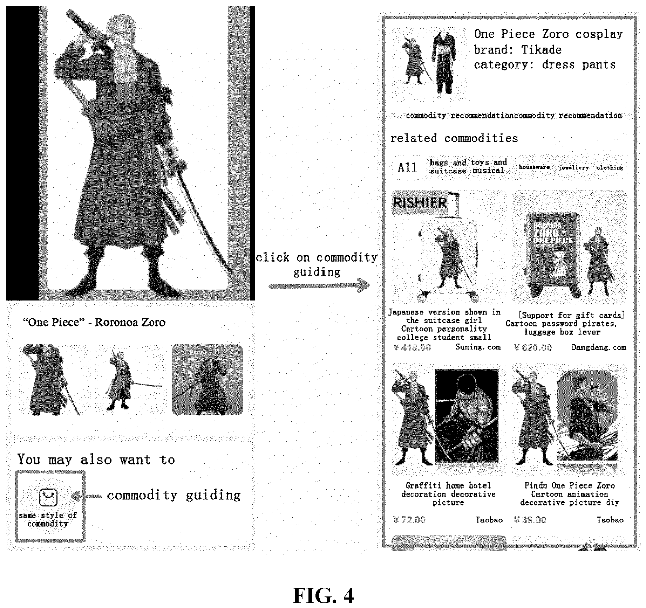

FIG. 3 firstly schematically shows a conventional display page for recommending commodities based on pictures, wherein an entity in the pictures is an animated character, and a picture identification page mainly includes information such as a picture set, commodity guiding, more size data, a picture origin, a similar picture and the like of the animated character. Here, the lower left corner of FIG. 3 is provided with a commodity recommendation guiding icon labeled "same style of commodity". In a case where the user clicks on the guiding icon, the page may jump to FIG. 4. FIG. 4 schematically shows that after clicking on the commodity guiding icon (left page), a commodity recommendation page (right page) appears, in which there are various kinds of conventional commodity information related to the animated character, such as a trunk printed with the animated character, a decorative picture of the animated character, etc. This form of commodity guiding is not novel enough to attract users to further understand commodity.

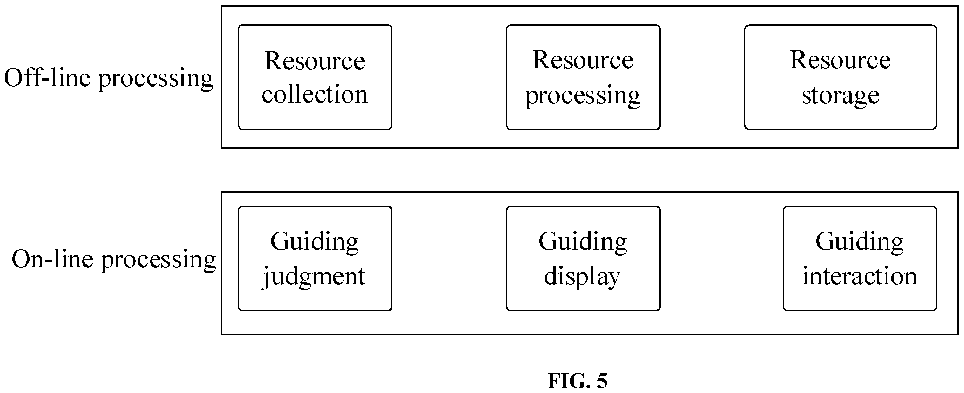

In this regard, referring to FIG. 5, according to the innovative design of the present disclosure, a brand-new commodity guiding form can be constructed through off-line processing and on-line processing, which are described in detail below.

### (1) Off-line processing

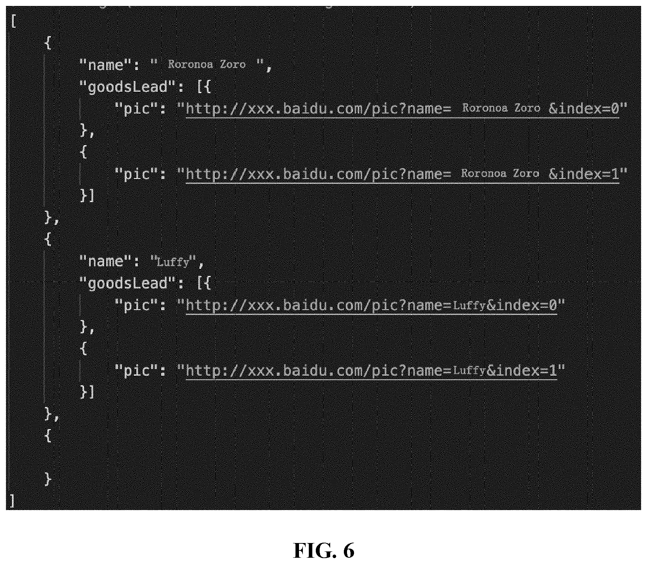

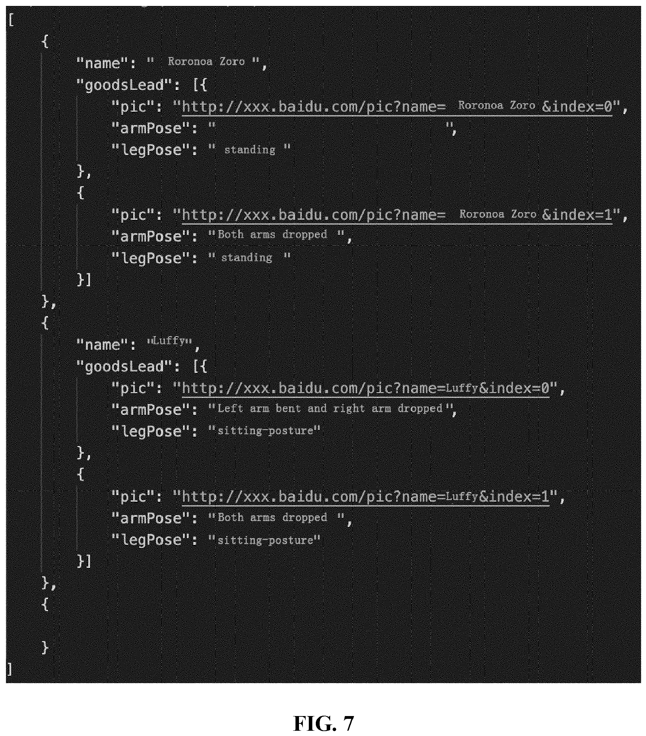

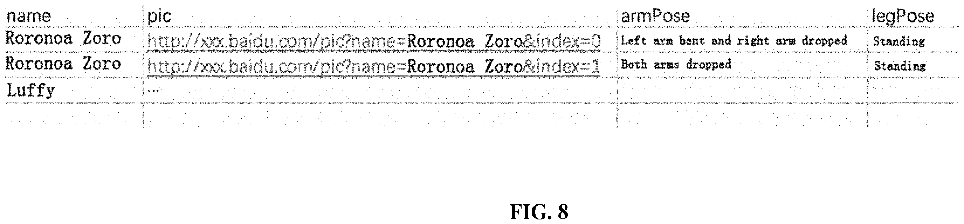

The off-line processing portion may include a resource collection process, a resource identification process and a resource warehousing process, each of which is described in detail below.
1. The resource collection process is primarily to collect commodity guiding resources for the animated character, such as first collecting as many animated characters as possible (e.g., the animated character of the top 100 in the animated toplist) and then collecting a hot picture of the garage kit commodity of each character, a data example is shown in FIG. 6, showing a list of two cartoon characters (Zoro and Luffy).
2. The resource identification processing is mainly that garage kit commodity pictures are subjected to human posture neural network model processing, garage kit human posture data are read, a data example is shown in FIG. 7, showing posture data of the two cartoon characters, including posture data of arms and legs.
3. The resource storage process essentially places the results of the resource identification process into an on-line database, a database table example is shown in FIG. 8, showing a pre-stored list of data for an animated character.

### (II) On-line processing

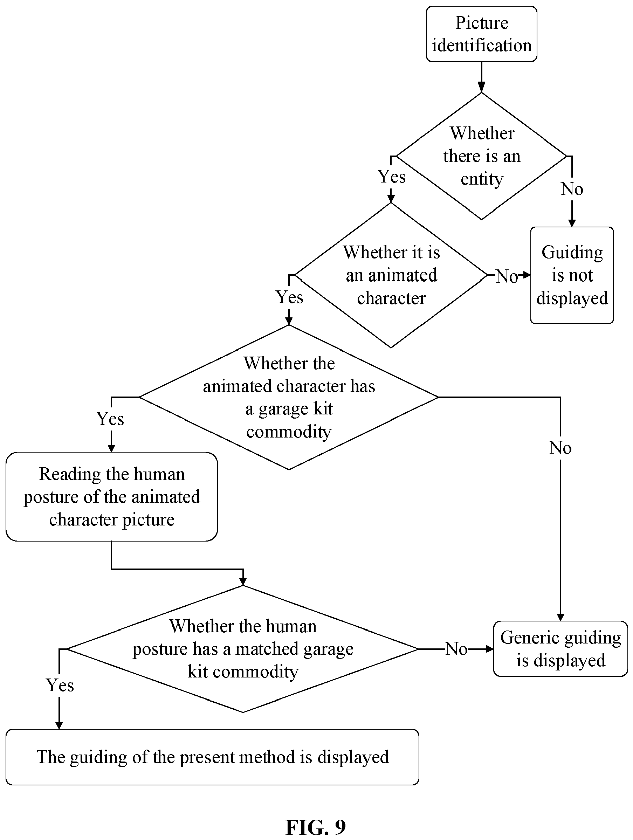

The on-line processing portion may include a guiding judgment process, a guiding display process and a guiding interaction process, each of which is described in detail below.
1. The guiding judgment process is mainly used for judging, according to the picture for the user identifying the picture, whether display guidance is needed. An exemplary flowchart is shown in FIG. 9. Specifically, a picture is identified after the picture is received, and whether an entity exists in the picture is judged, in a case where the entity does not exist, the display guidance is not performed, in a case where the entity exists, whether the entity is an animated character is judged, and in a case where the entity is a animated character, the display guidance is not performed, and in a case where the entity is the animated character, whether the animated character has a corresponding garage kit commodity is judged, and in a case where the animated character does not have the corresponding garage kit commodity, conventional commodity guiding (for example, adding a guiding icon of "same commodity" to a picture identification result page) is performed; in a case where there is a corresponding garage kit commodity, a human posture in the animated character picture is read, and whether there is a matched garage kit commodity in the human posture is judged; in a case where there is no matched garage kit commodity, conventional commodity guiding is performed; in a case where there is a matched garage kit commodity, commodity guiding provided by an embodiment of the present disclosure is performed, for example, after the operation is triggered, the current picture is switched into the picture of the recommended commodity.

In the above-mentioned processing process, the following solution can be adopted for how to judge whether the human posture has a matched garage kit commodity:
Step one: reading the human posture of the animated character picture, for example, read data are as follows:
   *Arm posture: left arm bent and right arm dropped*
   *Leg posture: standing*
Step two: viewing the garage kit commodity list of the animated character in the database, whether garage kit commodities with the same human posture exist, and in a case where the garage kit commodities with the same human posture exist, matching is successful.

Here, one case is: in a case where the "arm posture" and the "leg posture" are same, it is a complete matching; and another case is: in a case where only one item is same, it is an incomplete matching, for example:
*Arm posture: left arm bent and right arm dropped*
*Leg posture: sitting-posture*
The "leg posture" is different and is an incomplete matching.

In application, a device (or system) may be set to consider a successful matching in a case where a "complete matching" is required; alternatively, an "incomplete matching" may be set, i.e. a matching is considered successful.

Alternatively, in a case where there is a plurality of successfully matched commodities, one commodity may be randomly selected therefrom to be determined as a recommended commodity, and other priority strategies may be adopted to determine the recommended commodity.

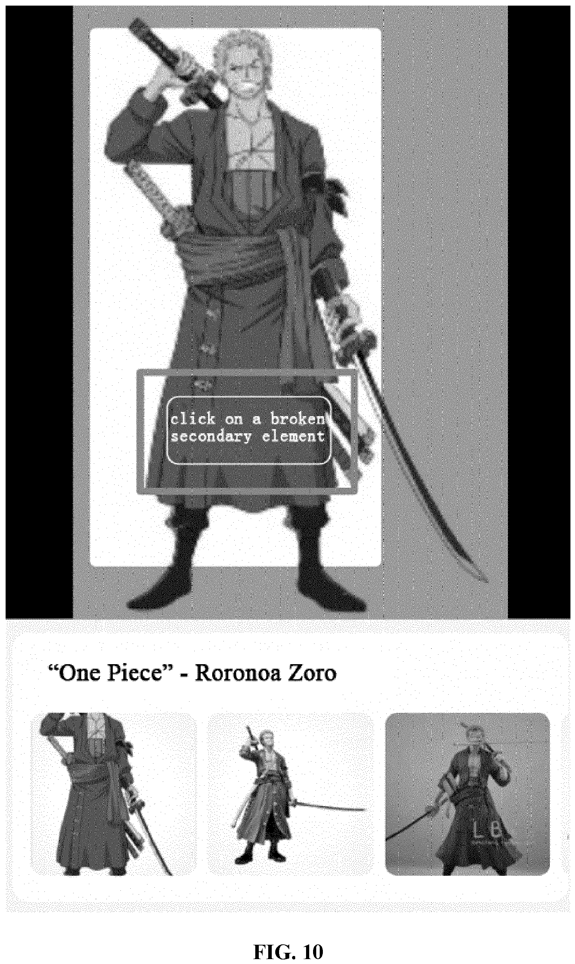

2. The guiding display process mainly displays a commodity guiding identifier (also referred to as a commodity guiding prompt and the like) according to the determined recommended commodity data, and the guide position may be a predetermined position or a random position on or around a picture. FIG. 10 schematically shows a guide prompt, which is located on a picture identification result page, and specifically displays a rectangular frame at a lower position in the middle of a picture, wherein the text in the frame may be, for example, "click on a broken secondary element", and the guide prompt may be suitable for switching an animated character picture of "secondary element" into a solid commodity picture with stereoscopic impression. The text and the small-sized picture below the animated character image in FIG. 10 are shown as conventional picture identification results.

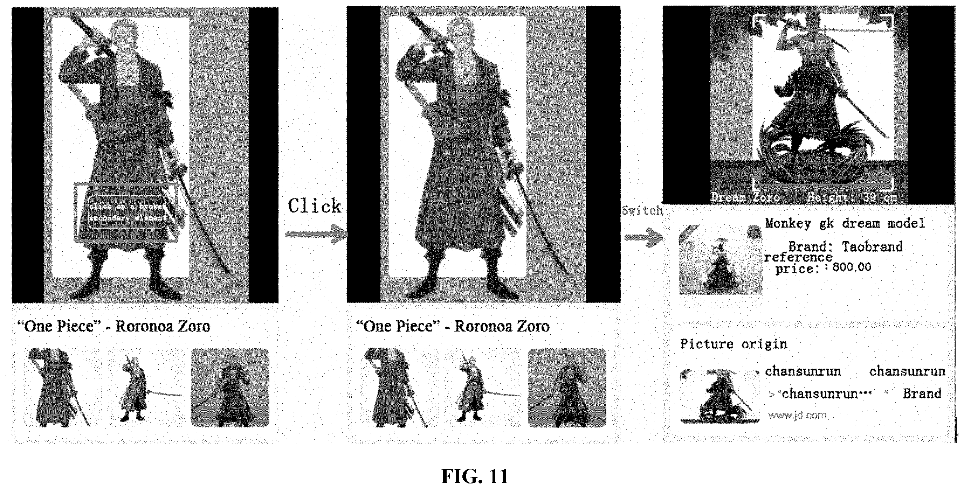

3. The guiding interactive processing mainly responds to a user operation, in a case where a user clicks the guiding prompt, the guiding prompt disappears, the animated character picture is switched into a garage kit commodity picture, and the page content is changed into the content of the recommended commodity. FIG. 11 schematically shows a plurality of key pictures in a switching process, the left side is a picture with a guide prompt, after the guide prompt is clicked, the prompt frame disappears, is displayed as a middle picture (such as an original picture), and then is displayed as a stereoscopic commodity picture on the right side within a predetermined time period, for example, 0.5 second or 1 second later, and the switching process is completed. In other embodiments, it may also be arranged to change from the original picture to the recommended commodity picture in a gradual switching manner within a predetermined time period.

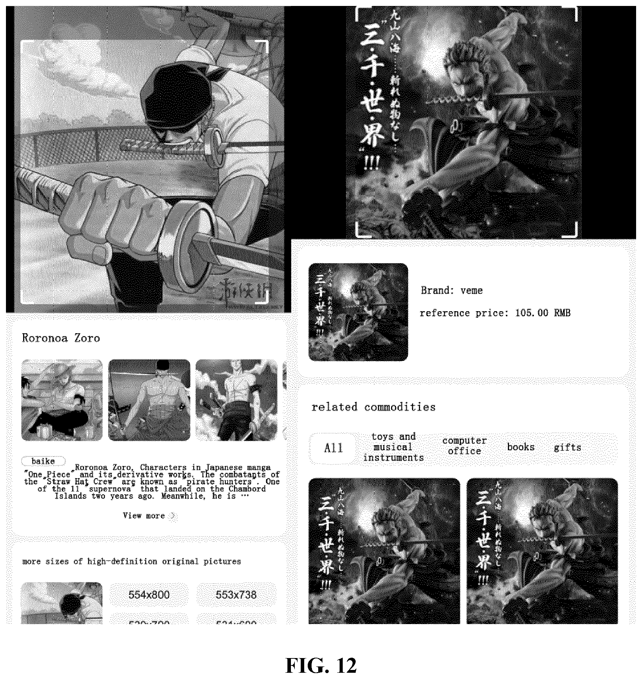

FIG. 12 schematically shows a comparison effect diagram of an identified picture and a recommended commodity picture processed according to another embodiment. According to at least one embodiment of the present disclosure, a novel guiding mode of "broken secondary element" may be formed, a user can be more attracted to enter commodity recommendation through matching constraint of high correlation degree of "human posture", which actually meets the picture identification requirement of the user from a deeper level.

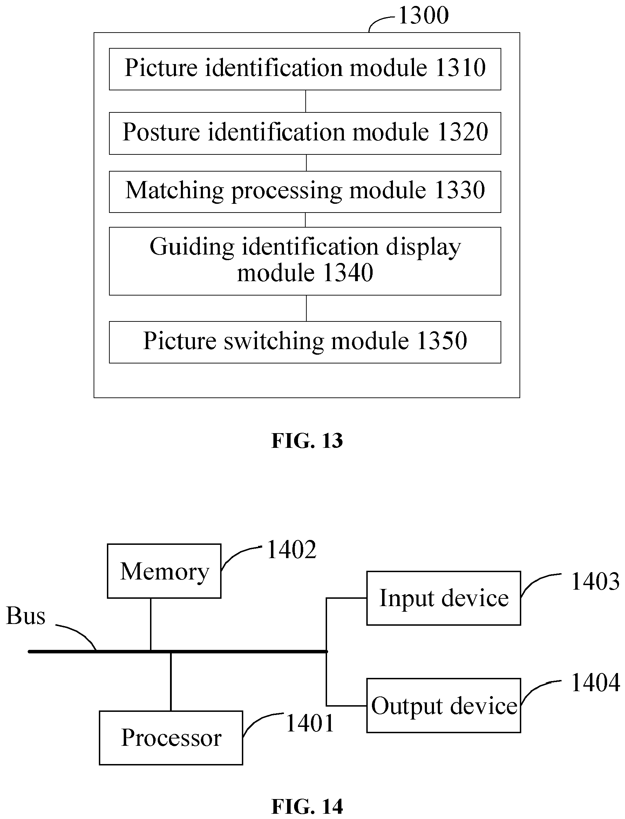

The particular arrangements and implementations of the embodiments of the present disclosure have been described from different perspectives above through various embodiments. In correspondence with the processing method of at least one embodiment described above, an embodiment of the present disclosure also provide a commodity guiding apparatus 1300, referring to FIG. 13, which includes:
a picture identification module 1310 configured for identifying identity information of a character in a first picture;
a posture identification module 1320 configured for performing posture identification on the character in the first picture, to obtain posture information;
a matching processing module 1330 configured for matching the posture information of the character in the first picture with posture information of a same character in a plurality of prestored commodity pictures, and determining the successfully matched commodity picture as a recommended commodity picture of the first picture;
a guide identifier display module 1340 configured for displaying a commodity guiding identifier in an area within or around the first picture; and
a picture switching module 1350 configured for switching the first picture into the recommended commodity picture after the commodity guiding identifier is triggered.

Optionally, the posture information of the character in the first picture includes an arm posture and/or a leg posture of the character, and the successfully matched commodity picture includes a commodity picture consistent with the arm posture of the character in the first picture; or the successfully matched commodity picture includes a commodity picture consistent with the leg posture of the character in the first picture; or the successfully matched commodity picture includes a commodity picture consistent with both the arm posture and the leg posture of the character in the first picture.

Optionally, the picture switching module directly switches the first picture into the recommended commodity picture within a first preset time period after the commodity guiding identifier is triggered; or the picture switching module switches the first picture into the recommended commodity picture in a gradual switching mode within a second preset time period after the commodity guiding identifier is triggered.

Optionally, the commodity guiding apparatus 100 may further include a picture collection module and a storage module, wherein
the picture collection module is configured for collecting commodity pictures, wherein the commodity pictures comprise commodities manufactured according to characters;
the picture identification module is further configured for performing identity identification on the characters in the collected commodity pictures, to obtain identity information of the characters in the respective commodity pictures;
the posture identification module is further configured for performing posture identification on the characters in the collected commodity pictures, to obtain posture information of the characters in the respective commodity pictures; and
the storage module is configured for storing the collected commodity pictures, the identity information of the characters in the respective commodity pictures and the posture information of the characters in the respective commodity pictures into a database.

Alternatively, the picture identification module performs the identity identification on the characters in the collected commodity pictures through an identity identification model; and the posture identification module performs the posture identification on the characters in the collected commodity pictures through a human posture identification model;
wherein the identity identification model and the human posture identification model are two different neural network models; or the identity identification model and the human posture identification model are a neural network model with identity identification capability and human posture identification capability.

The functions of respective modules in each apparatus of the embodiments of the present disclosure may be seen in the processes correspondingly described in the embodiments of the method described above and will not be described in detail herein.

According to an embodiment of the present disclosure, the present disclosure further provides an electronic device and a readable storage medium. FIG. 14 is a block diagram of an electronic device for implementing a commodity guiding method according to an embodiment of the present disclosure. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as a personal digital assistant, a cellular telephone, a smart phone, a wearable device, and other similar computing devices. The components shown herein, their connections and relationships, and their functions are by way of example only and are not intended to limit the implementations of the application described and/or claimed herein.

As shown in FIG. 14, the electronic device may include one or more processors 1401, a memory 1402, and interfaces for connecting components, including high-speed interfaces and low-speed interfaces. The respective components are interconnected by different buses and may be mounted on a common main-board or otherwise as desired. The processor may process instructions executed within the electronic device, including instructions stored in or on the memory to display graphical information of a graphical user interface (GUI) on an external input/output device, such as a display device coupled to the interface. In other implementations, a plurality of processors and/or buses may be used with a plurality of memories, if necessary. Also, a plurality of electronic devices may be connected, each providing some of the necessary operations (e.g., as an array of servers, a set of blade servers, or a multiprocessor system). An example of a processor 1401 is shown in FIG. 14.

The memory 1402 is a non-transitory computer-readable storage medium provided by the present disclosure. The memory stores instructions executable by at least one processor to cause the at least one processor to execute the commodity guiding method provided by the present disclosure. The non-transitory computer-readable storage medium of the present disclosure stores computer instructions for enabling a computer to execute the commodity guiding method provided by the present disclosure.

The memory 1402, as a non-transitory computer-readable storage medium, may be configured to store non-transitory software programs, non-transitory computer executable programs and modules, such as program instructions/modules corresponding to the commodity guiding method in the embodiments of the present disclosure (e.g., the picture identification module 1310, the posture identification module 1320, the matching processing module 1330, the guiding identification display module 1340 and the picture switching module 1350 shown in FIG. 13). The processor 1401 executes various functional applications and data processing of the server by running the non-transitory software programs, instructions and modules stored in the memory 1402, that is, implements the commodity guiding method in the above method embodiments.

The memory 1402 may include a program storage area and a data storage area, wherein the program storage area may store an operating system, and an application program required for at least one function; and the data storage area may store data created according to the use of the electronic device of analyzing and processing a searched result, etc. In addition, the memory 1402 may include a high speed random access memory, and may also include a non-transitory memory, such as at least one disk storage device, a flash memory device, or other non-transitory solid state storage devices. In some embodiments, the memory 1402 may alternatively include memories remotely located with respect to the processor 1401, and these remote memories may be connected, via a network, to the electronic devices of analyzing and processing a searched result. Examples of such networks may include, but are not limited to, the Internet, an intranet, a local area network, a mobile communication network and combinations thereof.

The electronic device corresponding to the commodity guiding method in the embodiment of the present disclosure may further include an input device 1403 and an output device 1404. The processor 1401, the memory 1402, the input device 1403, and the output device 1404 may be connected by a bus or in other ways, and the bus connection is taken as an example in FIG. 14.

The input device 1403 may receive input digitals or character information, and generate a key signal input related to a user setting and a function control of the electronic device of analyzing and processing a searched result. For example, the input device may be a touch screen, a keypad, a mouse, a track pad, a touch pad, a pointer stick, one or more mouse buttons, a track ball, a joystick, and other input devices. The output device 1404 may include a display apparatus, an auxiliary lighting device (e.g., a light emitting diode (LED)), a tactile feedback device (e.g., a vibrating motor), etc. The display apparatus may include, but is not limited to, a liquid crystal display (LCD), an LED display, and a plasma display. In some embodiments, the display apparatus may be a touch screen.

Various implementations of the systems and techniques described herein may be implemented in a digital electronic circuit system, an integrated circuit system, an application specific integrated circuit (ASIC), a computer hardware, a firmware, a software, and/or a combination thereof. These various implementations may include an implementation in one or more computer programs, which can be executed and/or interpreted on a programmable system including at least one programmable processor; the programmable processor may be a dedicated or general-purpose programmable processor and capable of receiving and transmitting data and instructions from and to a storage system, at least one input device, and at least one output device.

These computing programs (also referred to as programs, software, software applications, or codes) may include machine instructions of a programmable processor, and may be implemented using high-level procedural and/or object-oriented programming languages, and/or assembly/machine languages. As used herein, the terms "machine-readable medium" and "computer-readable medium" may refer to any computer program product, apparatus, and/or device (e.g., a magnetic disk, an optical disk, a memory, a programmable logic device (PLD)) for providing machine instructions and/or data to a programmable processor, including a machine-readable medium that receives machine instructions as machine-readable signals. The term "machine-readable signal" may refer to any signal used to provide machine instructions and/or data to a programmable processor.

In order to provide an interaction with a user, the system and technology described here may be implemented on a computer having: a display device (e. g., a cathode ray tube (CRT) or a liquid crystal display (LCD) monitor) for displaying information to the user; and a keyboard and a pointing device (e. g., a mouse or a trackball), through which the user can provide an input to the computer. Other kinds of devices can also provide an interaction with the user. For example, a feedback provided to the user may be any form of sensory feedback (e.g., visual feedback, auditory feedback, or tactile feedback); and an input from the user may be received in any form, including an acoustic input, a voice input or a tactile input.

The systems and techniques described herein may be implemented in a computing system (e.g., as a data server) that may include a background component, or a computing system (e.g., an application server) that may include a middleware component, or a computing system (e.g., a user computer having a graphical user interface or a web browser through which a user may interact with embodiments of the systems and techniques described herein) that may include a front-end component, or a computing system that may include any combination of such background components, middleware components, or front-end components. The components of the system may be connected to each other through a digital data communication in any form or medium (e.g., a communication network). Examples of the communication network may include a local area network (LAN), a wide area network (WAN), and the Internet.

The computer system may include a client and a server. The client and the server are typically remote from each other and typically interact via the communication network. The relationship of the client and the server is generated by computer programs running on respective computers and having a client-server relationship with each other.

It should be understood that the steps can be reordered, added or deleted using the various flows illustrated above. For example, the steps described in the present disclosure may be performed concurrently, sequentially or in a different order, so long as the desired results of the technical solutions disclosed in the present disclosure can be achieved, and there is no limitation herein.

The above-described specific embodiments do not limit the scope of the present disclosure. It will be apparent to those skilled in the art that various modifications, combinations, sub-combinations and substitutions are possible, depending on design requirements and other factors. Any modifications, equivalent substitutions, and improvements within the spirit and principles of the present disclosure are intended to be included within the scope of the present disclosure.

## Claims

1. A commodity guiding method, comprising:
Identifying (S101) identity information of a character in a first picture;
performing (S102) posture identification on the character in the first picture, to obtain posture information;
matching (S103) the posture information of the character in the first picture with posture information of a same character in a plurality of prestored commodity pictures, and determining the successfully matched commodity picture as a recommended commodity picture of the first picture;
displaying (S104) a commodity guiding identifier in an area within or around the first picture; and
switching (S105) the first picture into the recommended commodity picture after the commodity guiding identifier is triggered.

2. The method of claim 1, wherein
the posture information of the character in the first picture comprises an arm posture and/or a leg posture of the character;
the successfully matched commodity picture comprises a commodity picture consistent with the arm posture of the character in the first picture; or
the successfully matched commodity picture comprises a commodity picture consistent with the leg posture of the character in the first picture; or
the successfully matched commodity picture comprises a commodity picture consistent with both the arm posture and the leg posture of the character in the first picture.

3. The method of claim 1 or 2, wherein the switching the first picture into the recommended commodity picture after the commodity guiding identifier is triggered, comprises:
directly switching the first picture into the recommended commodity picture within a first preset time period after the commodity guiding identifier is triggered;
or,
switching the first picture into the recommended commodity picture in a gradual switching mode within a second preset time period after the commodity guiding identifier is triggered.

4. The method of any one of claims 1 to 3, wherein, before performing picture identification processing on the first picture, the method further comprising:
collecting (S201) commodity pictures, wherein the commodity pictures comprise commodities manufactured according to characters;
performing (S202) identity identification on the characters in the collected commodity pictures, to obtain identity information of the characters in the respective commodity pictures;
performing (S203) posture identification on the characters in the collected commodity pictures, to obtain posture information of the characters in the respective commodity pictures; and
storing (S204) the collected commodity pictures, the identity information of the characters in the respective commodity pictures and the posture information of the characters in the respective commodity pictures into a database.

5. The method of claim 4, wherein
the identity identification is performed on the characters in the collected commodity pictures through an identity identification model; and the posture identification is performed on the characters in the collected commodity pictures through a human posture identification model; wherein,
the identity identification model and the human posture identification model are two different neural network models; or the identity identification model and the human posture identification model are a neural network model with identity identification capability and human posture identification capability.

6. The method of any one of claims 1 to 5, wherein
the character comprises at least one of: a cartoon character, an animated character, a comic character, and a movie and television work character.

7. A commodity guiding apparatus (1300), comprising:
a picture identification module (1310) configured for identifying identity information of a character in a first picture;
a posture identification module (1320) configured for performing posture identification on the character in the first picture, to obtain posture information;
a matching processing module (1330) configured for matching the posture information of the character in the first picture with posture information of a same character in a plurality of prestored commodity pictures, and determining the successfully matched commodity picture as a recommended commodity picture of the first picture;
a guide identifier display module (1340) configured for displaying a commodity guiding identifier in an area within or around the first picture; and
a picture switching module (1350) configured for switching the first picture into the recommended commodity picture after the commodity guiding identifier is triggered.

8. The apparatus of claim 7, wherein
the posture information of the character in the first picture comprises an arm posture and/or a leg posture of the character;
the successfully matched commodity picture comprises a commodity picture consistent with the arm posture of the character in the first picture; or
the successfully matched commodity picture comprises a commodity picture consistent with the leg posture of the character in the first picture; or,
the successfully matched commodity picture comprises a commodity picture consistent with both the arm posture and the leg posture of the character in the first picture.

9. The apparatus of claim 7 or 8, wherein
the picture switching module directly switches the first picture into the recommended commodity picture within a first preset time period after the commodity guiding identifier is triggered;
or,
the picture switching module switches the first picture into the recommended commodity picture in a gradual switching mode within a second preset time period after the commodity guiding identifier is triggered.

10. The apparatus of any one of claims 7 to 9, further comprising: a picture collection module and a storage module, wherein
the picture collection module is configured for collecting commodity pictures, wherein the commodity pictures comprise commodities manufactured according to characters;
the picture identification module is further configured for performing identity identification on the characters in the collected commodity pictures, to obtain identity information of the characters in the respective commodity pictures;
the posture identification module is further configured for performing posture identification on the characters in the collected commodity pictures, to obtain posture information of the characters in the respective commodity pictures; and
the storage module is configured for storing the collected commodity pictures, the identity information of the characters in the respective commodity pictures and the posture information of the characters in the respective commodity pictures into a database.

11. The apparatus of claim 10, wherein
the picture identification module performs the identity identification on the characters in the collected commodity pictures through an identity identification model; and the posture identification module performs the posture identification on the characters in the collected commodity pictures through a human posture identification model; wherein
the identity identification model and the human posture identification model are two different neural network models; or the identity identification model and the human posture identification model are a neural network model with identity identification capability and human posture identification capability.

12. The apparatus of any one of claims 7 to 11, wherein
the character comprises at least one of: a cartoon character, an animated character, a comic character, and a movie and television work character.

13. An electronic device, comprising:
at least one processor (1401); and
a memory (1402) communicatively connected with the at least one processor; wherein
the memory stores instructions executable by the at least one processor, the instructions being executed by the at least one processor to enable the at least one processor to perform the method of any one of claims 1 to 6.

14. A non-transitory computer-readable storage medium storing computer instructions for enabling a computer to perform the method of any one of claims 1 to 6.

15. A computer program product comprising computer instructions which, when executed by a processor, cause the processor to perform the method of any one of claims 1 to 6.
